# EUROPEAN PATENT APPLICATION

(11) **EP 3 410 422 A1**
(43) Date of publication of application: **05.12.2018**
(21) Application number: 18183803.8
(22) Date of filing: 18.06.2015
(51) Int. Cl.: G09C 5/00, H04N 1/40

(54) **METHODS AND APPARATUS FOR CRYPTOGRAPHY**

(30) Priority: 18.06.2014 US 201462013689 P
(62) Divisional of application: 15810211.1
(71) Applicant: Collier, James, Oakland, CA 94610 (US)
(72) Inventor: Collier, James, Oakland, CA 94610 (US)
(74) Representative: Hancox, Jonathan Christopher

(57) **Abstract**

The invention relates to encryption systems for initiating, encrypting, decrypting, storing and transporting undetectable secure electronic data communications over public and private networks, including the Internet or the like. An encryption system is disclosed for encrypting, storing and transporting a message securely, comprising a multi-dimensioned key-container into which the message is encrypted.

## Description

### BACKGROUND OF THE INVENTION

### TECHNICAL FIELD

This invention relates generally to the fields of cryptography and steganography, more particularly to systems, methods and apparatus for transforming a color or grayscale graphic image into a multi-dimensioned encryption key and container for encrypting, storing and transporting hidden text and graphical messages securely.

### DESCRIPTION OF THE RELATED ART

Single-dimensioned encryption is the accepted means by which data is systematically transformed and subsequently transformed in the reverse, via the process of decryption, into its original meaningful form. This transformation in both directions is accomplished by the creation and use of shared encryption keys available only to the owners, senders and recipients of the communications.

Until now, no cryptographic or steganographic system has transformed data using multi-dimensioned encryption key-containers to initiate, secure, and contain hidden text and graphic communication. Multiple dimensions increase the capacity, type and security of the communication. Consequently, instead of using one-dimensional encryption keys to initiate and separately secure a detectable single dimension of data, the methods and apparatus herein provide for a multi-dimensioned encryption key-container to initiate and secure multiple dimensions of undetectable data communication. Using the methods and apparatus herein, the owner, both as sender and recipient, is able to initiate, encrypt, decrypt, store and transport communication between and among each other that is unintelligible and undetectable by any human or machine not in possession of the related shared encryption key-container.

No present day cryptographic system provides practical perfect secrecy in initiating, encrypting, decrypting, storing and transporting electronic data communication. Perfect secrecy, the state such that an encryption is absolutely non-reversible without the related key, is only attainable when an encrypted message from an encryption system contains no information about the unencrypted message. A historical cryptographic system called a One-time Pad (OTP), or Vernam Cipher, achieved perfect secrecy of encrypting and decrypting but never achieved the requirement to securely initiate over any physical distance between the participants. The methods and apparatus resulting herein extend and transform the perfect secrecy outcome of one-dimensional OTP beyond existing limitations to a multi-dimensioned encryption system, achieving modern-day perfect secrecy over unlimited distances.

### SUMMARY OF THE INVENTION

A primary element of the present invention is a multi-dimensional encryption key-container and methods for initiating, encrypting, decrypting, storing and transporting non-detectable electronic data communications between senders and recipients, 'communicators', across public and private networks where such networks may or may not be secure from non-authorized access.

The information or data comprising the graphic image that is the source image for creating a multi-dimensioned encryption key-container is a bit-mapped image, such as a .bmp file, but may also include other bit-mapped image file formats, such as JPEG, TIFF, PNG, and the like.

The information or data comprising the data communication is contained within the multi-dimensioned encryption key-container by means of vectors expressing attributes, said vector being the visible result of a set of machine-readable instructions describing the visual character, such as size, shape, color, and xy-axis coordinate position, of a geometric-shaped object present in a viewable file format.

The encryption key-container begins as a picture image of varying grayscale detail that is converted to an array or series of dot vectors with each converted dot and said dot's surrounding white space representing the overlay equivalent of the underlying grayscale image detail of the beginning picture. Upon viewing a given dot surrounded by white space, the viewer will visually comprehend, or 'see' and mentally calculate, the underlying image detail of the beginning picture, as presented by said dot.

While the number of dimensions of the multi-dimensioned encryption key-container is expressed as a specific quantity, such as three (3) or four (4), pertaining to the dot vector, the invention is not so limited. The number of dimensions of an encryption key-container governed by this invention relates directly to the specific identifiable and measurable attributes of the selected geometric-shaped vector objects utilized by the encryption key-container and method. Thus, any specific "geometric-shaped vector" should have the same meaning as "dot vector" in describing and understanding the invention and also any quantified number of dimensions or attributes should be considered as having the same meaning as "multiple-dimensions" or "multiple attributes" in describing and understanding the invention.

While the activities of communicating secure and hidden information is expressed as an exchange by one or between two parties or communicators, such as owner or sender and recipient, the invention is not so limited. The number of communicators to a secure communication may be any number, from a single individual communicating only with themselves, to a group of unlimited number of individuals communicating with all other members of the group as a group or individually. Thus, any specific quantity or number of individuals should have the same meaning as 'unlimited quantity of individuals' in describing and understanding the invention.

The ability of a sender or recipient to store, send and receive a secure and undetectable communication insures that private information is not revealed through the non-authorized access to the communication. The security of the apparatus and methods described herein protects the access to and privacy of the communicator's communication separate and apart from each other, including in the case where an external party is aware of the communication by other means and has access to the communication. The undetectable form of the communication removes all evidence of the communication and the ramifications that might result from any suspicion which that evidence might provide to any unauthorized or inadvertent third-party who might gain possession of the communication.

More specifically, in one embodiment, the present invention provides a method and apparatus that causes a system of a communicator to: extract selected data from a graphical formatted file, such as jpeg, or the like; calculate respective private encryption keys; calculate respective public encryption keys from those private keys; calculate shared encryption key-container(s) via mathematical exchange and combination of the communicator's public and private keys; encrypt multiple and non-detectable text and graphical communications within the shared encryption key-containers; store the encrypted files in place; transport the encrypted files electronically or physically between communicators in different physical locations; using the shared encryption key-containers; and decrypt the text and graphical communications stored within the multiple dimensions of the shared encrypted key-container files in order to comprehend the true meaning expressed by the communicators of the communication.

The embodiment herein described departs from known methods, apparatus and systems by using multiple dimensions within individual image vector files to provide for both the initiation of shared encryption keys at a distance and across public and private networks and containment of multiple data communications on multiple dimensions of individual shared encryption key-containers such that the stored data communications are secure and undetectable by anyone not in possession of the specific related shared encryption key-container(s).

Because initiation and storage of shared encryption key-containers containing data communications is a multiple step process, achieving the initiation and containment functionality together in a multi-dimensioned encrypted file is a significant improvement of the invention over prior art which use separate, single-dimensioned files and single-dimensioned file types for initiating the encryption process and separately containing, encrypting and decrypting the target data communication. Additionally, achieving this dual functionality in a manner that is undetectable to unauthorized human or machine assessment is also a significant improvement over initiation and storage apparatus and methods where the transformational activities of initiating, encrypting, decrypting, storage and transport are visible and discernible by human or machine, in part or whole, and inviting of suspicion even while they are secure.

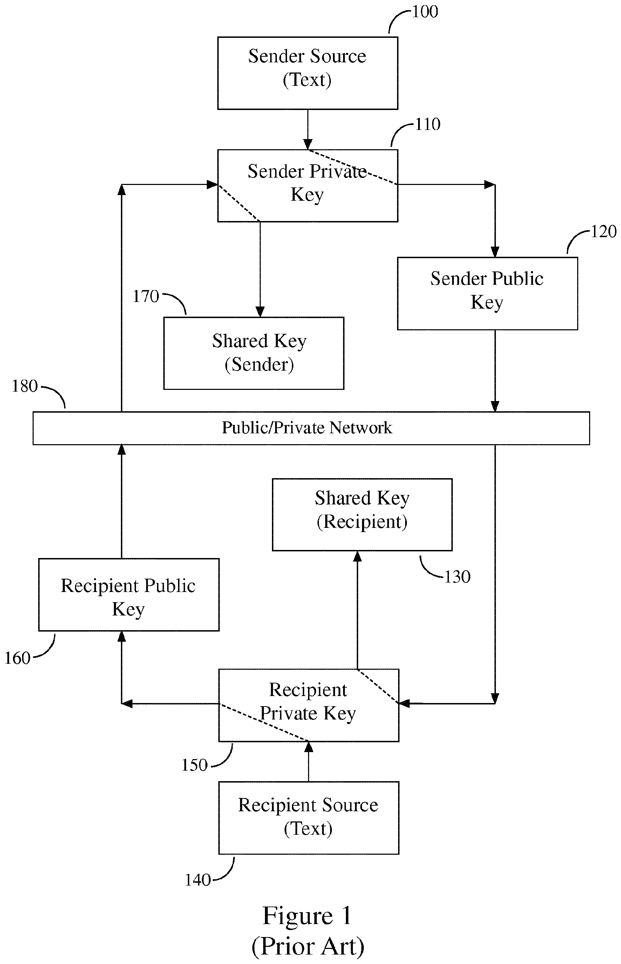

Referring to Fig. 1, one-dimensional public encryption methods and apparatus, such as those utilizing Diffie-Hellman Key Exchange (DHKX) protocol, traditionally perform the initiation and storage functions separately. The initiation activity whereby an Owner or Sender selects a source 100, Recipient selects a source 140, and Sender calculates a private key 110 and, from it, calculates a public key 120, the Recipient calculates a private key 150 and, from it, calculates a public key 160, and each send their respective public keys to the other, where the Sender's public key 120 is mathematically combined with the Recipient's private key 150, and where the Recipient's public key 160 is mathematically combined with the Sender's private key 110, resulting in equal shared keys 130 and 170 such that the participants, Sender and Recipient are able to use their respective shared keys to separately, apart from initiation, create, send and receive, and store detectable electronic communication within and across public/private networks 180 and the like.

### BRIEF DESCRIPTION OF THE DRAWINGS

Fig. 1 is a schematic diagram that depicts public key encryption exchange across a public/private network according to prior art;
Fig. 2 is a schematic diagram that depicts the differences between one-dimensional arrays and multi-dimensional arrays for containing steganographic and cryptographic data according to the present invention and as useful for creating, storing and transporting secure and undetectable data communications;
Fig. 3 is a schematic diagram that depicts the difference between pixel bit-mapped images and vector images (Stipple drawings) for representing encryption keys-containers, and while maintaining an appearance and structure that obscures significant differences of said vector images.
Fig. 4 is a schematic diagram that depicts two (2) states of information, encrypted and decrypted, and one (1) interim state for illustration purposes of a shared encryption key-container with a hidden graphical message;
Fig. 5 is a schematic diagram that depicts the steps of applying the mathematical constructs of the Diffie-Hellman Key Exchange protocol to image vector arrays resulting in shared encryption key-containers for secure and hidden communication;
Fig. 6 is a schematic diagram that depicts the attributes of a vector file (stipple) and the extension of certain attributes for transformation to a shared encryption key-container for facilitating secure communication;
Fig. 7 is a schematic diagram that depicts the dimensions of the dot vectors, including attributes, roles and functions, and the formulas for transforming certain dot vector attributes to securely store and hide communications;
Fig. 8 is a schematic diagram that depicts the dot vector locations of an encryption key-container and, specifically, an example offset between two dot vectors A and B representing the ASCII text character "D";
Fig. 9 is a schematic diagram that depicts the application of the ASCII offset grid within the Voronoi cell to illustrate the computation of the offset value between two dot vector locations representing the ASCII value of the ASCII text character "D".

### DEFINITIONS

As used herein, the following terms shall be understood to have the following meaning:
Algorithm: An effective method expressed as a finite list of well-defined instructions for calculating a function. Starting from an initial state and initial input (perhaps empty), the instructions describe a computation that, when executed, will proceed through a finite number of well-defined successive states, eventually producing "output" and terminating at a final ending state. The transition from one state to the next is not necessarily deterministic; some algorithms, known as randomized algorithms, incorporate random input.
Array: An array is a systematic arrangement of objects (data), usually in rows and columns.
ASCII Table: A table representing a character-encoding scheme originally based on the English alphabet. ASCII codes represent text in computers, communications equipment, and other devices that use text.
Attack Channel: A location whose security from unauthorized intrusion is uncertain.
Attribute: A factor of an object or other kind of entity.
Centroid: The intersection of all straight lines that divide X, a plane figure or 2-dimensional geometric shape, into two parts of equal moment about the line.
Cypher (cipher): An algorithm for performing encryption or decryption-a series of well-defined steps that can be followed as a procedure.
Channel: Steganographic dimension available for steganographic modification and message signal transmission.
Ciphertext: The result of encryption performed on plaintext using an algorithm called a cipher. Ciphertext is also known as encrypted or encoded information because it contains a form of the original plaintext that is unreadable by a human or computer without the proper cipher to decrypt it.
Covertext: The input or source container file to a steganographic system that is modified to represent/contain the hidden information.
Cryptography: The practice and study of techniques for secure communication in the presence of third parties (called adversaries).
Decryption: The process of decoding a message whose meaning was not obvious.
Diffie-Hellman Key Exchange (DHKX): A specific method of exchanging cryptographic keys that allows one or more parties that have no prior knowledge of each other to jointly establish a shared secret key over a non-secure communications channel. This key can then be used to encrypt subsequent communications using a symmetric key cipher.
Hash Code: The value returned by a hash function.
Hash Function: Any algorithm or subroutine that maps large data sets of variable length, called *keys,* to smaller data sets of a fixed length.
Hidden Information: Hidden information is only readable by parties in possession of related digital key file.
Key Exchange Protocol: A protocol whereby two or more parties can agree on a key in such a way that both influence the outcome. If properly done, this precludes undesired third-parties from forcing a key choice on the agreeing parties. Protocols that are useful in practice also do not reveal to any eavesdropping party what key has been agreed upon.
Lloyd's Algorithm: Computational procedure used to generate dot drawings in the style of stippling. In this application, the centroids can be weighted based on a reference image to produce stipple illustrations matching an input image.
One-Time Pad (OTP, Vernam Cipher): A type of encryption which has been proven to be impossible to crack if used correctly. Each bit or character from the plaintext is encrypted by a modular addition with a bit or character from a secret random key (or *pad*) of the same length as the plaintext, resulting in a ciphertext. If the key is truly random, as large as or greater than the plaintext, never reused in whole or part, and kept secret, the ciphertext will be impossible to decrypt or break without knowing the key. Properly used one-time pads are secure in this sense, even against adversaries with infinite computational power.
Perfect Secrecy: A term coined by Paul Shannon, American mathematician, electronic engineer and cryptographer where ciphertext generated by a one-time pad gives absolutely no additional information about the plaintext. Perfect secrecy is a strong notion of cryptanalytic difficulty.
Steganography: The art and science of writing hidden messages in such a way that no one, apart from the sender and intended recipient, suspects the existence of the message, a form of security through obscurity.
Stegotext: Innocuous images modified in some way so as to contain the ciphertext, representing encrypted and hidden text, documents, drawings, or the like, obscured from view.
Stipple Rendering Engine (SRE): The proprietary (copyrighted) software (programmed instructions) of Dotwerx LLC, which accepts visual input in the form of a photograph, drawing, or the like and renders a representative stipple drawing consisting of dot vectors, or the like.
Vector (Graphics): The use of geometrical primitives such as points, lines, curves, and shapes or polygon(s) which are all based on mathematical expressions to represent images in computer graphics. "Vector", in this context, implies more than a straight line.
Voronoi Diagram (also Weighted-Centroidal Voronoi Diagram): A way of dividing space into a number of regions. A set of points (called seeds, sites or generators) is specified beforehand and, for each seed, there will be a corresponding region consisting of all points closer to that seed than to any other. The regions are called Voronoi cells.

### DETAILED DESCRIPTION OF THE INVENTION

The present invention utilizes unbreakable crytographic-steganographic key-container files for securing and hiding communications such that communicating parties are able to initiate, encrypt, decrypt, store and transport communications over non-secure networks that are undetectable and inaccessible to anyone who does not possess the related shared encryption key-container(s).

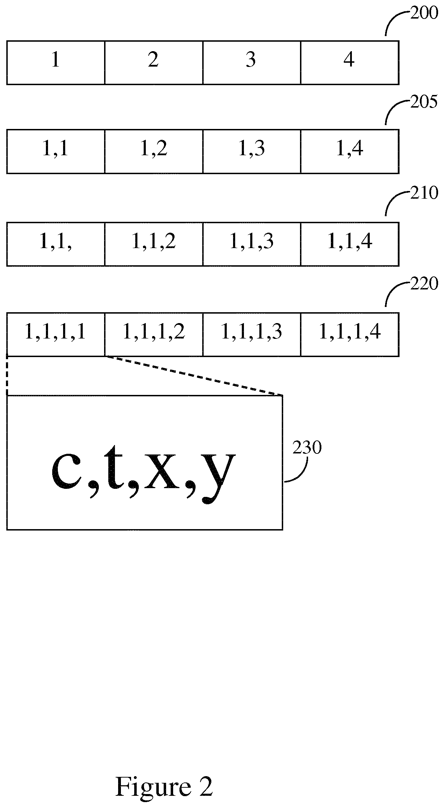

Referring to Fig. 2, the initiation activity of the present invention provides for both continuous and discrete communications over the Internet and other public and private networks. Prior to this invention, one-dimension encryption key arrays 200 were created and exchanged across electronic networks to act separately and apart as inputs to encryption and decryption processes that could transform files in either a discrete or continuous manner into detectable files. With the present invention, the initiating of multi-dimensioned encryption key arrays 205, 210 and 220 of the encryption key-containers contain the encrypted data along the dimensions 230. The first attribute of the encryption key-container 230 is 'c', describing the image or stegoimage that is viewable. The second attribute of the encryption key-container 230 is 't', describing the stegotext or the hidden text message. The third attribute of the encryption key-container 230 is 'x', describing the hidden X-axis coordinate location of a hidden graphic. The fourth attribute of the encryption key-container is 'y', describing the hidden Y-axis coordinate location of a hidden graphic.

Visible encryption attracts unwanted suspicion. With the present invention, the dual function of the multi-dimensioned encryption key-container is hidden from view and suspicion both during initiation, whereby the secure creation and exchange of the encryption keys occur across a non-secure network, and during the store and transport of the encrypted key-container, with a hidden text and graphical message therein.

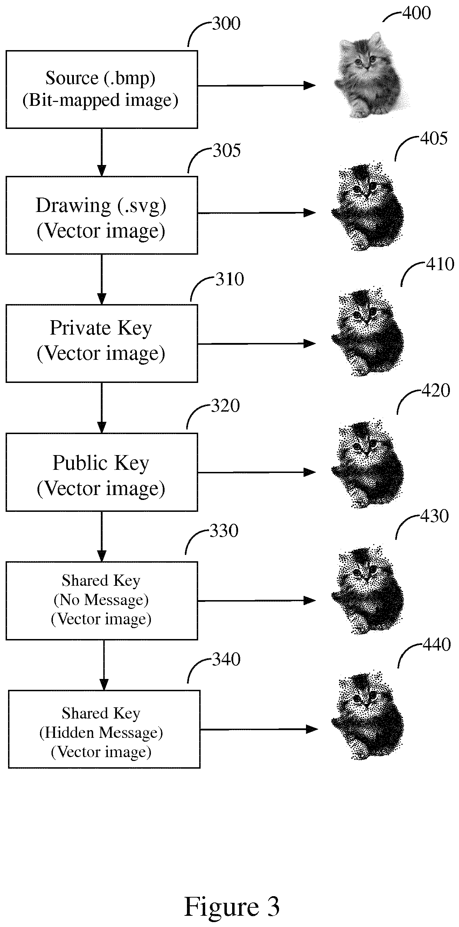

Until now, encryption keys could not act as either a key or container, with key data or message data results that remained hidden. In many jurisdictions around the world, the mere possession of encrypted material is against the law and can bring significant criminal penalties to the bearer. The present invention provides no evidence of encryption. The viewable encryption key-container appears, under any systematic analysis, to be functionally equivalent to any other encryption key-container created from the same source. Referring to Fig. 3, with this invention, communicators of secure communication initiate the process by choosing an innocuous source graphic 300, such as a jpeg 400 or the like, which the invention will render into a vector image drawing 305. The private encryption key 310 is computed from vector image drawing 305 and presented as a stipple drawing 410, visually approximating the jpeg 400.. The private encryption key 310 is, in turn, computed into a public key 320 via the modular math function of the Diffie-Hellman Key Exchange (DHKX) protocol. Via further application of the DHKX protocol, the public key 320 is placed with the recipient party via multiple different secured or unsecured pathways. Each party, upon receipt of the other communicating party's public key 320, proceed to further apply the DHKX protocol, combining each public key 320 with the other party's private key 310 to generate a shared encryption key-container 330. The shared encryption key-container with no message 330, or shared encryption key-container hidden message 340, is analytically indistinguishable from either the originating private encryption key 310 or the originating public encryption key 310. The viewable vector images 405, 410, 420, 430, and 440 are also indistinguishable from each other.

There are at least two ways to represent text communication, text-as-text and graphics-as text (images as text). With the invention, images can be stored that translate visually to text while hidden within another image. The attribute of a dot vector can contain hidden data of a location of a different dot vector. Once revealed, the previously hidden data instructs the presentation of dots at different locations, revealing the hidden image.

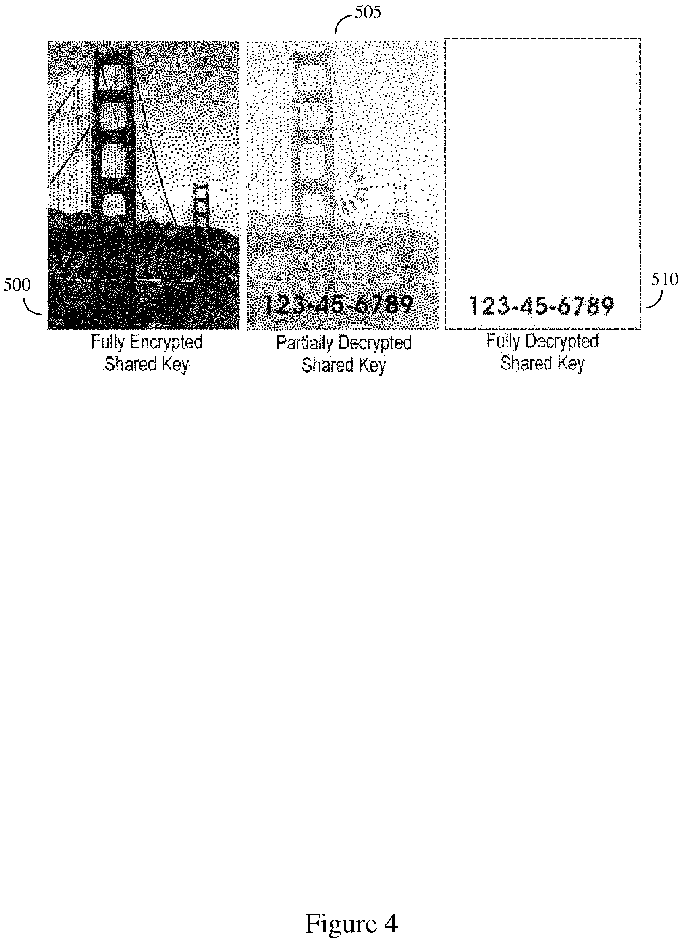

Referring to Fig. 4, prior to the invention, steganographic data hidden within a vector image was not encrypted and therefore subject to detection with only the understanding of the method of embedding the data. Successful cryptographic analysis depends on finding and exploiting some point of vulnerability, and the visually exposed encryption can provide this for certain classes of cryptographic attack. With the invention, the existence of hidden data in the fully encrypted shared key-container 500 is both encrypted and undetectable and revealed as non-hidden data in the partially decrypted shared key 505 (for illustration) and fully decrypted shared key-container 510 only with the possession and application of the shared key-container 330, regardless of knowledge of the method of embedding or encrypting the data.

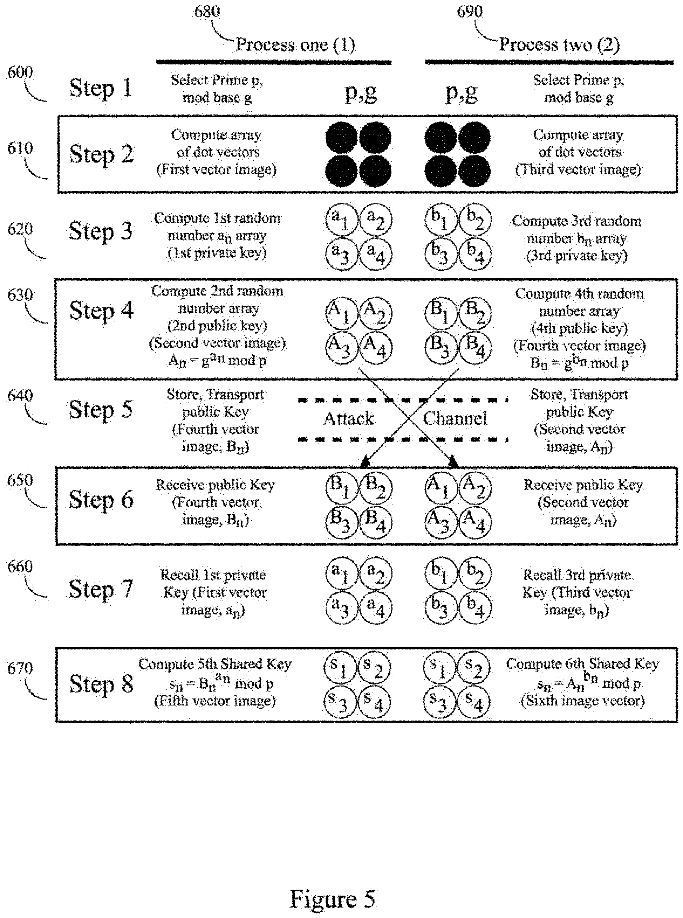

Storing and exchanging secure data communications within and across non-secure networks requires specific protocols. Referring to Fig. 5, the invention fulfills the requirements for secure store and exchange of data via application of the Diffie-Hellman Key Exchange (DHKX) protocol in eight steps executed individually by the participants and resulting in the possession by one or both participants of a shared encryption key-container. For storing-only, each communicator performs the steps of process one 680 and steps of process two 690. For storing and exchanging, the communicator completes the steps of process one 680, while the second communicator completes the steps of process two 690.

In step one 600, all communicators select a mutually agreed upon prime number p and modular base g.

In step two 610, communicators select individual source files 300, such as a jpeg, to compute an array of dot vectors where each vector has an associated random number generated from the application of the Weighted-Centroidal Voronoi Diagram and Lloyd's algorithms to the source file. Process one 680 at step two 610 yields the First vector image. Process two 690, at step two 610 yields the Third vector image.

In step three 620, communicators compute array(s) of 'private' random number integers from the First vector image yielding the 1^{st} random number array aₙ, and from the Third vector image yielding the 3^{rd} random number array bₙ. Process one 680 at step three 610 yields the 1^{st} private key, and process two 690 at step three 610 yields 3^{rd} private key.

In step four 630, communicators compute array(s) of 'public' random numbers, for the second random number array Aₙ derived from aₙ using equation Aₙ = g^{aₙ} mod p, and for the fourth random number array Bₙ derived from bₙ using equation Bₙ = g^{bₙ} mod p. Process one 680 at step four 630 yields the second public key, and process two at step four 630 yields the fourth public key.

In step five 640, communicators transport each participant's public random number array to the other participant within or across an attack channel. Process one at step five 640 stores and transports the second public key to the communicator executing process two 690. Process two 690 at step five 640 stores and transports the fourth public key to the communicator executing process one 680.

In step six 650, the communicator executing process one 680 is receiving the public random number array from the Fourth vector image of the other communicator executing process two 690. In step six 650, the communicator executing process two 690 is receiving the public random number array from the Second vector image of the other communicator executing process one 680. Process one 680 at step six 650 receives fourth Public key, and process two 690 at step six 650 receives second Public key.

In step seven 660, each communicator recalls their private random number array. The communicator executing process one 680 recalls the First image vector. The communicator executing process one 690 recalls the Third image vector. Process one 680 at step seven 650 recalls the first Private key, and process two 690 at step seven 650 receives the third Private key.

In step eight 670, communicator computes an array of shared random numbers, such that Sₙ for the communicator executing process one 680 is Sₙ = Bₙ^{aₙ} mod p, and Sₙ for the communicator executing process two 690 is Sₙ = Aₙ^{bₙ} mod p, whereby both Sₙ results are equal to each other and act as shared keys to encrypt and decrypt hidden communication.

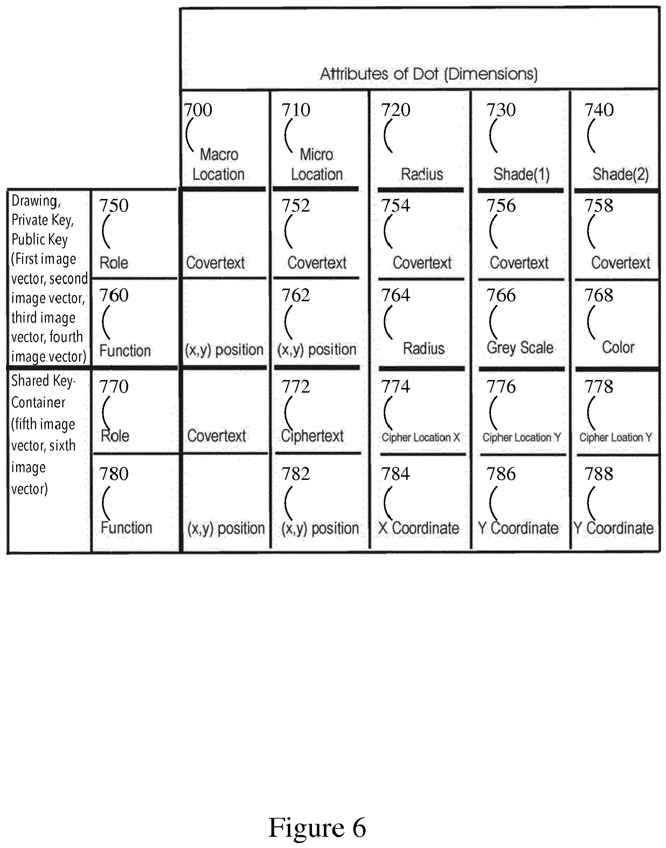

Referring to Fig. 3 of the prior art, the attributes of the drawing 305 are transformed in the private key 310, public key 320, shared key (No Message) 330 and shared key (Hidden Message) 340. Referring to Fig. 6, the attributes of the circular dot vector provide for roles and functions in initiating, encrypting, decrypting, storing and transporting non-detectable data communications. According to the present invention, specifically the role and function of certain dot vector attributes are modified from drawing role 750 and drawing function 760 to shared key role 770 and shared key function 780. This modification of role and function are improvements which provide transformation capability and storage capacity of hidden and encrypted text and graphical communication. The dot vector attributes whose role and function are improved from drawing to shared key are Micro Location 710, Radius 720, Shade (1) 730, and Shade (2) 740.

Specifically for Micro Location 710, Drawing Covertext 752 is transformed to Shared Key-Container Ciphertext 772.

Specifically for Radius 720, Drawing Covertext 754 is transformed to Shared Key-Container Cipher location X 774, and Drawing Radius 764 is transformed to Shared Key-Container X Coordinate 784.

Specifically for Shade (1)730, Drawing Covertext 756 is transformed to Shared Key-Container Cipher location Y 776, and Drawing Grey Scale 766 is transformed to Shared Key-Container Y Coordinate 786.

Specifically for Shade (2) 740, Drawing Covertext 758 is transformed to Shared Key-Container Cipher Location Y 778, and Drawing Color 768 is transformed to Shared Key-Container Y Coordinate 788.

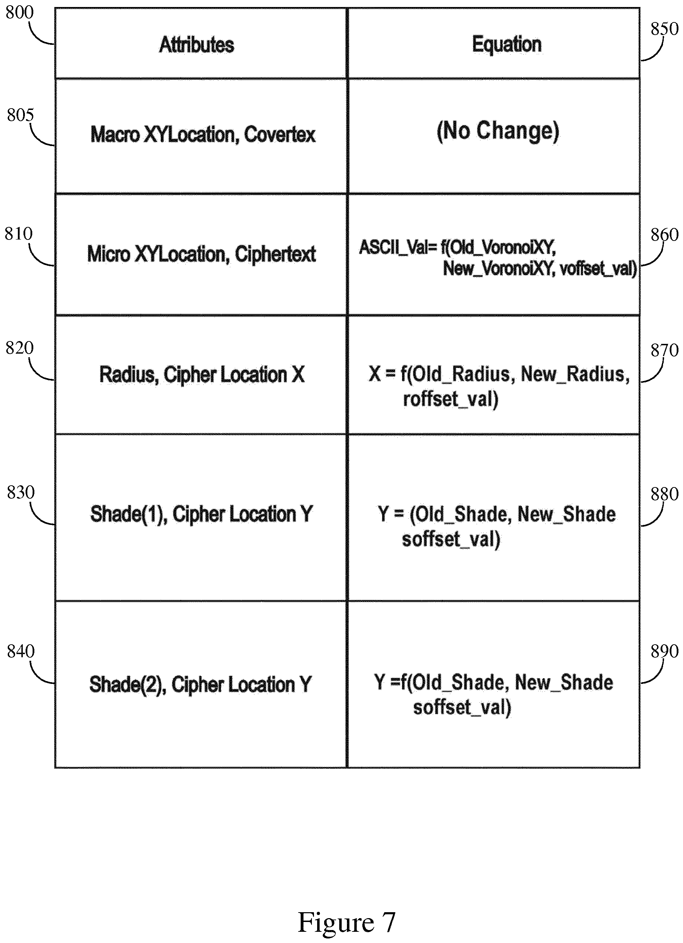

Referring to Fig. 7, each attribute 800, except for Macro Location 805, is transformed via a related functional equation 850 which reassigns the attribute 800 to simultaneously represent the source image and contain data representing a hidden message. For each attribute 800 that is transformed, an attribute of the dot vector is systematically modified such that the modification, when compared against the dot vector's non-modified state, yields a component of a hidden message. The systematic modification of the attributes of the dot vectors contain no information individually or in aggregate that provides any knowledge of the hidden message or evidence of any message existence therein, thereby providing the improvement of 'perfect and hidden secrecy'.

The attribute Micro XYLocation 810 applies the equation 860, whereby ASCII_Val=f(Old_VoronoiXY, New_VoronoiXY, voffset_val). For encrypting a message, the ASCII_Val and Old_VoronoiXY are inputs, yielding New_VoronoiXY and voffset_val. For decrypting a message, the Old_VoronoiXY and New VoronoiXY are inputs, yielding the voffset_val and ASCII_Val. The ASCII_Val corresponds to a text character in the ASCII table. The hidden message will equal the aggregation of the text corresponding to each and all ASCII Val results.

The attribute Radius 820 applies the equation 870, whereby X=f(Old_Radius,New_Radius, roffset_val). For encrypting a message, the X coordinate and Old_Radius are inputs, yielding New_Radius and roffset_val. For decrypting a message, the Old_Radius and New_Radius are inputs, yielding roffset_val and X coordinate. The X coordinate represents a position on the X-axis of a viewable file. The x-axis of the dot vectors of the hidden image will correspond to each of the X coordinates.

The attribute Shade (1) 830 applies the equation Y=f(Old_Shade, New_Shade, soffset_val). For encrypting a message, the Y coordinate and Old_Shade are inputs, yielding New_Shade and soffset_val. For decrypting a message, the Old_Shade and New_Shade are inputs, yielding soffset_val and Y coordinate. The Y coordinate represents a position on the Y-axis of a viewable file. The y-axis of the dot vectors of the hidden image will correspond to each of the Y coordinates. The attribute Shade (1) is utilized when, referring to Fig. 3 of the prior art, the source image and related vector images 305,310, 320, 330, and 340 are grayscale.

Referring to Fig. 7 of the prior art, the attribute Shade (2) 840 applies the equation Y=f (Old Shade, New_Shade; soffset_val).). For encrypting a message, Y coordinate and Old_Shade are inputs, yielding New_Shade. For decrypting a message, the Old_Shade and New_Shade are inputs, yielding soffset_val and Y coordinate. The Y coordinate represents a position on the Y-axis of a viewable file. The y-axis of the dot vectors of the hidden image will correspond to each of the Y coordinates. The attribute Shade (2) is utilized when, referring to Fig.3 of the prior art, the source image and related vector images 305,310, 320, 330, and 340 are color.

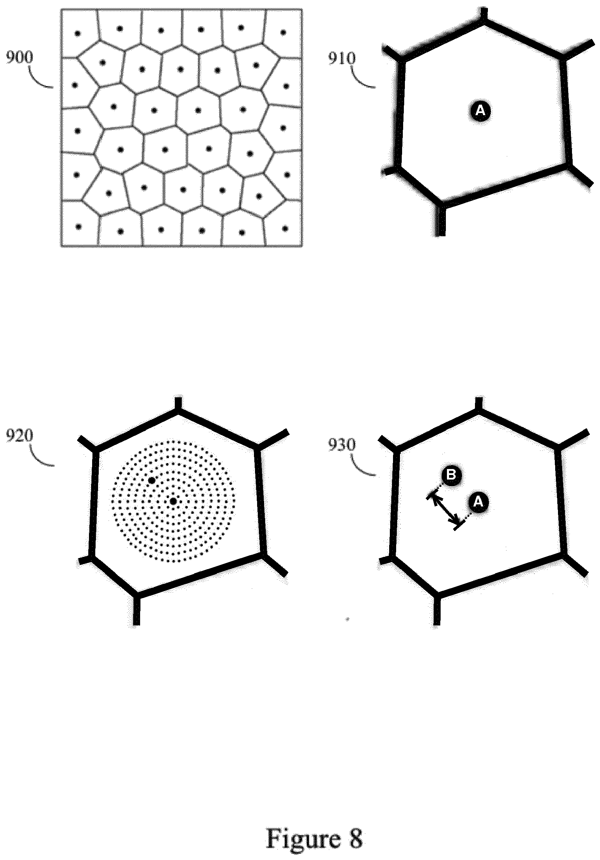

Referring to Fig. 8, the present invention utilizes a macro x, y coordinate system 900 to position dot vector arrays within the entire viewable area such that the aggregate dot vectors present the vector image of the source file. Each Voronoi cell 910 of a shared key utilizes the ASCII Grid 920 to modify the dot vector location to represent a text character that is a component part of a hidden message. The circular design of the ASCII Grid 920 serves to minimize the physical distance and visual distortion between Old_VoronoiXY and New_VoronoiXY, for any set of voffset_val values, while providing capacity for the text characters of the ASCII table. The illustrative centroids, "A" and "B" on the ASCII Grid 920 present the ASCII offset 930 example of a computed ASCII value of 68 which represents the ASCII text character 'D'.

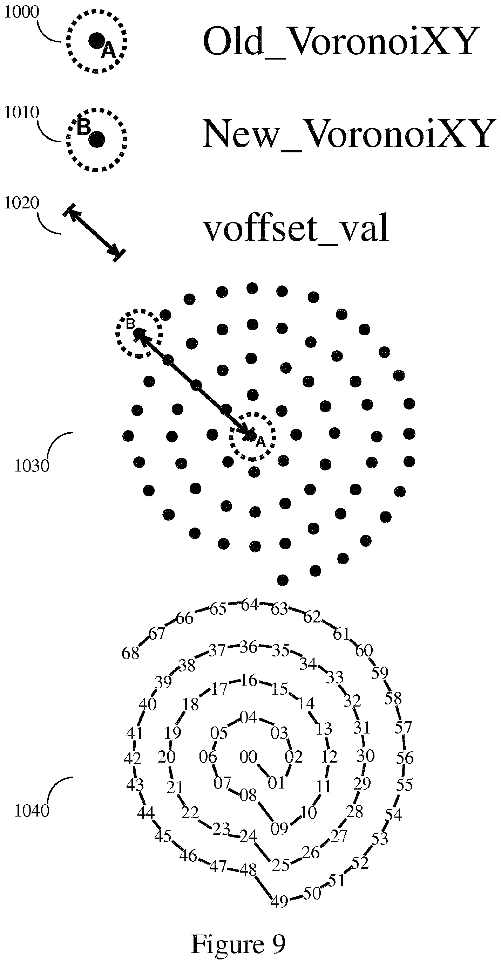

Referring Figs. 6 and 7 of the prior art, the Shared Key-Container (x,y) position 782 dot vector attribute contains the Micro_XYLocation 810 of a hidden ASCII text message. Referring to Fig. 9, the voffset_val 1020 value of 68 and the text character 'D' is computed by alignment, referring to Fig. 8 of the prior art, center of the ASCII Grid 920, referring to Fig. 9 of the prior art, with the center of Old_VoronoiXY 1000 of a dot vector followed by a 68 single step-wise circular traverse 1040 of the ASCII grid until the ASCII value is achieved, thereby establishing the coordinate of New_VoronoiXY 1010 and the center of a new positioned dot vector. In this manner, the dots of a dot vector array representing a source are systematically repositioned as reflected by voffset_val 1020, referring to Fig. 8 of the prior art, utilizing the ASCII Grid 920, to achieve ASCII offset 930 within their Voronoi cells 910 to contain, in the aggregate, the hidden message.

In accordance with an embodiment of the invention, advantages of multi-dimensional encryption, in addition to the capability of securing and hiding communications, include enabling the senders and recipients to have control over the following:
- Ability to select various graphical files to either represent the source for initiating the encryption process or simply represent the exercise of fine artistic interests, thereby establishing a nearly unlimited supply of cover graphical images that can serve innocuously as encryption keys to contain secure data communication.
- Ability to initiate, encrypt, decrypt, store and transport secure authenticating digital signatures of unencrypted documents using hash functions with hash codes for the purpose of authenticating the sender, the time and the unaltered state of the unencrypted document under consideration.
- Ability to reuse multiple-dimension shared encryption key-containers without reducing the security or undetectable nature of the data communications contained therein.

It will be obvious to those skilled in the art that not all possible functions and roles of attributes of encryption key-containers are shown in the exemplary attribute schematic Fig. 6 of the prior art. The exemplary dimensions of attributes of dots 700-740 that are shown provide an understanding of the invention and detail of dimensions, roles and functions using the invention in accordance with an embodiment.

A person skilled in the art would readily appreciate that the invention disclosed herein is described with respect to specific embodiments that are exemplary. However, this should not be considered a limitation on the scope of the invention. Specifically, other implementations of the disclosed invention are envisioned and hence the invention should not be considered to be limited to the specific embodiments discussed herein above. Embodiments may be implemented on other non-computing and computing-capable systems and processors or a combination of the above. Embodiments may also be implemented as a software program stored in a memory module to be run on an embedded, standalone or distributed processor or processing system. Embodiments may also be run on a processor, a combination of integrated software and hardware, or as emulation on hardware on a server, a desktop, or a mobile computing device. The invention should not be considered as being limited in scope based on specific implementation details, but should be considered on the basis of current and future envisioned implementation capabilities.

Although the invention is described herein with reference to the preferred embodiment, one skilled in the art may readily appreciate that other applications may be substituted for those set forth herein without departing from the scope of the present invention defined in the claims.

In an encryption process, using a first bit-mapped graphic image, the steps comprising: converting the first bit-mapped graphic image in to a first vector image; and converting the first vector image into a second vector image.

In the encryption process the bit-mapped graphic image is preferably converted into said first vector image using Voronoi Diagram algorithm and Lloyd's algorithm wherein said first vector image is an array of dots. The array of dots may be within Voronoi Diagram cells. The location of a dot within a Voronoi cell of said first vector image may be a function of a first random number determined by the Voronoi Diagram algorithm and Lloyd's algorithm. The first vector image may be converted into said second vector image using Voronoi Diagram algorithm and Lloyd's algorithm wherein the location of a dot within a Voronoi cell of said second vector image a function of a second random number that is a function of said first random number. The encryption process may further comprise converting a second bit-mapped graphic image in to a third vector image; and converting said third vector image into a forth vector image. The encryption process may further comprise creating a fifth vector image by combining said first vector image and said fourth vector image. Alternatively, the encryption process may further comprise creating a fifth vector image as follows, combining said second vector image and said third vector image. The second bit-mapped graphic image may be converted into said third vector image using Voronoi Diagram algorithm and Lloyd's algorithm wherein said third vector image is an array of dots. The array of dots may be within Voronoi Diagram cells. The location of a dot within a Voronoi cell of said third vector image may be a function of a third random number determined by the Voronoi Diagram algorithm and Lloyd's algorithm. The third vector image may be converted into said fourth vector image using Voronoi Diagram algorithm and Lloyd's algorithm wherein the location of a dot within a Voronoi cell of said fourth vector image a function of a fourth random number that is a function of said third random number. The encryption process may further comprise creating a fifth vector image. The fifth vector image may be a function of said first and fourth random numbers. The fifth vector image may be a function of said second and third random numbers.

## Claims

1. An encryption system for encrypting, storing and transporting a message securely, comprising a multi-dimensioned key-container into which the message is encrypted.

2. The encryption system of claim 1, wherein the message includes any form of data.

3. The encryption system of claim 1 or 2, wherein the message is stored and transported in the multi-dimensioned key-container.

4. The encryption system of claim 1, 2 or 3, wherein the multi-dimensioned key-container is an array of numbers.

5. The encryption system of claim 4, wherein the array of numbers is the mathematical expression for a computer graphic image.

6. The encryption system of claim 5, wherein the computer graphic image comprises a plurality of dots and the array of numbers comprises at least two attributes of each dot selected from size, shape, color, and xy-axis coordinate position.

7. The encryption system of claim 4, 5 or 6, wherein numbers of the multi-dimensioned key-container are altered by encrypting the message into the multi-dimensioned key-container.

8. The encryption system of any preceding claim, further comprising a public key that is an array of numbers.

9. The encryption system of claim 8, wherein the array of numbers is the mathematical expression for a computer graphic image.
